Europäisches Patentamt

European Patent Office

Office européen des brevets

(11) Publication number: **0 422 774 A2**

## EUROPEAN PATENT APPLICATION

(21) Application number: 90309877.0

(22) Date of filing: **10.09.90**

(51) Int. Cl.⁵: **G11B 7/00, G11B 7/24, G11B 23/40**

The title of the invention has been amended (Guidelines for Examination in the EPO, A-III, 7.3).

(30) Priority: **08.09.89 JP 234207/89**

(43) Date of publication of application: **17.04.91 Bulletin 91/16**

(84) Designated Contracting States:
**DE FR GB IT NL**

(71) Applicant: **SHARP KABUSHIKI KAISHA**
**22-22 Nagaike-cho Abeno-ku**
**Osaka 545(JP)**

(72) Inventor: **Ishikawa, Toshio**
**16-9, 1-chome, Nishichiyogaoka Nara-shi**
**Nara-ken(JP)**
Inventor: **Ohta, Kenji**
**3-9-17, Hirosedai Kawai-cho,**
**Kitakatsuragi-gun**
**Nara-ken(JP)**
Inventor: **Terashima, Shigeo**
**95-86, Nikaido Kaminosho-cho, Tenri-shi**
**Nara-ken(JP)**
Inventor: **Okumura, Hideaki**
**1-16-303, Yayoi-cho**
**Kashiwa-shi, Chiba-ken(JP)**

(74) Representative: **Brown, Kenneth Richard et al**
**R.G.C. Jenkins & Co. 26 Caxton Street**
**London SW1H 0RJ(GB)**

(54) Optical memory element and protective sheet for use with the same.

(57) A sheet for use with an optical memory element having a labelling section accommodated on its external face and where inscriptions can be made with writing utensils, and an adhesive section accommodated on a reverse face and that adheres to and is detachable from a protective layer of the optical memory element. An optical memory element such that the above sheet is disposed on top of a protective layer. With such an arrangement, inscriptions can be written upon the optical memory element and changed, and the sheet can be replaced when it is stained.

FIG.2

EP 0 422 774 A2

## OPTICAL MEMORY ELEMENT AND SHEET FOR USE WITH THE SAME

### FIELD OF THE INVENTION

The present invention relates to various optical memory elements that permit information to be read through optical means, or to various optical memory elements that permit information not only to be read but also to be recorded and erased. The invention also relates to a sheet for use with such an optical memory element.

### BACKGROUND OF THE INVENTION

Some known optical memory elements are designed such that information is recorded thereon through the presence and absence of minute pits, changes in the direction of magnetization of minute areas, changes in the phase of minute areas, changes in the color of minute areas etc. The high density and large capacity of these optical memory elements have made them the focus of attention and large efforts have been invested ill the research and development of such optical memory elements.

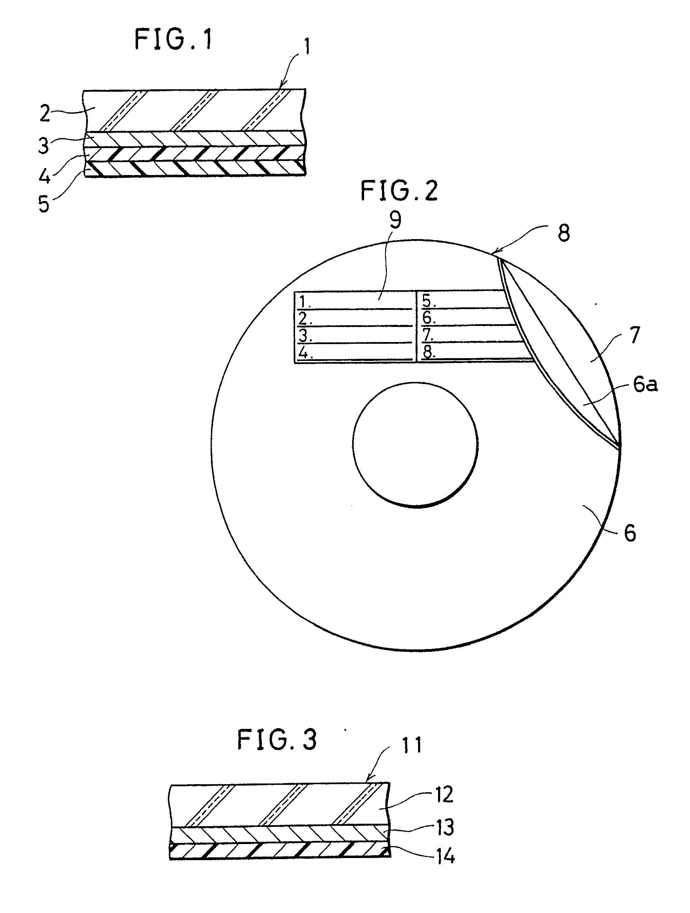

As illustrated ill Fig. 3, a magneto-optical memory element 11, i.e. an optical memory element that makes use of the magneto-optical effect, is generally composed of:
a transparent substrate 12,
a recording layer 13 formed on one face of the transparent substrate 12 and comprising a recording film such as a thin film made of an alloy of rare earth elements and transition metals, and
a protective layer 14 formed on top of the recording layer 13, and that serves as protection for the recording layer 13.

The transparent substrate 12 may be made of plastic such as polycarbonate, acrylic, epoxy, amorphous polyolefine etc., of glass or of other material. As to the protective layer 14, it is formed by an ultraviolet hardenable resin whose main components are polyurethane acrylate, epoxy acrylate and other components.

The name of the manufacturing company, a table of contents indicating the contents recorded on the magneto-optical memory element 11, etc. are usually printed on the protective layer 14 in UV ink, before the magneto-optical memory element 11 composed of the above members arrives on the market.

However, the optical memory element 11 produced as described above, suffers from the two following drawbacks.

First, the protective layer 14 is designed exclusively as a protective measure against chemical degradation, such as for instance degradation of the recording layer 13 due to oxidation or water absorption. It is thin, its thickness being approximately equal to 10 to 30$\mu$m, and offers almost no protection against physical forces, such as for example when a hard object hits the optical memory element 11 and damages the recording layer 13. Moreover, even if the protective layer 14 prevents the recording layer 13 from being destroyed, the scratches on the protective layer 14 spoil the appearance of the magneto-optical memory element 11.

The second drawback especially applies to optical memory elements whereon information can be recorded, such as magneto-optical memory elements. Namely, the contents recorded on the optical memory element change each time the user records new information. When for example audio information is recorded, the titles of the melodies recorded change, whereby the initial table of contents does not correspond to the contents recorded on the optical memory element.

### SUMMARY OF THE INVENTION

An object of the present invention is to provide a sheet for use with an optical memory element capable of protecting to a certain degree an optical memory element from physical forces, such as for example when a hard object hits the optical memory element and damages the recording layer thereof, and to provide an optical memory element where the above sheet is affixed in a detachable fashion on top of a protective layer.

Another object of the present invention is to provide a detachable sheet for use with an optical memory element, whereon inscription can be made with a writing utensil.

Still another object of the present invention is to provide an optical memory element where the contents recorded thereon always correspond to the contents inscribed on an external face thereof.

In order to achieve the above objects, an optical memory element in accordance with the present invention is designed such that a recording layer where information is recorded, a protective layer serving as protection for the recording layer, and a detachable sheet are laminated in the order listed, on a transparent substrate.

In addition, a sheet for use with an optical memory element in accordance with the present invention is characterized in that a labelling section whereon inscriptions can be made with a writing utensil is accommodated on the external face of the sheet, and an adhesive section that can be fixed on and removed from the protective layer of the optical memory element is accommodated on the reverse side of the sheet.

With the above arrangement, protection from physical forces can be achieved to a certain degree, such as for example when a hard object hits the magneto-optical memory and damages the recording layer thereof, etc. In addition, it is the sheet for use with ai, optical memory element that is hit and damaged by the hard object. The protective layer meant to protect the recording layer thus remains undamaged. When scratches on the sheet spoil the appearance of the optical memory element, the problem can be solved by simply replacing the sheet by a new one.

In addition to the above function, the above arrangement presents an advantage that applies especially to optical memory elements whereon information can be recorded. Namely, when the user records new information, the old sheet can be removed and replaced by a new sheet where the contents of the newly recorded information are inscribed in the labelling section. In such a manner, the contents inscribed on the external face of the optical memory element always correspond the recorded contents. Moreover, the sheet does not necessarily need to be replaced each time the recorded information is rewritten, for the contents inscribed on the external face of the optical memory element to correspond to the recorded contents. Namely, provision can be made such that the contents inscribed in the labelling section of the sheet, can be rubbed out with an eraser or the like. In such a case, the sheet should be replaced when, as described above, scratches on the sheet spoil the appearance of the optical memory element, or when the labelling section of the sheet gets stained after the labelled contents were repeatedly erased.

For a fuller understanding of the nature and advantages of the invention, reference should be made to the ensuing detailed description taken in conjunction with the accompanying drawings.

## BRIEF DESCRIPTION OF THE DRAWINGS

Fig. 1 illustrates a first embodiment of the present invention, and shows a cross-sectional view of essential parts of an optical memory element.

Fig. 2 illustrates another embodiment of the present invention, and shows a plan view of an optical memory element whereon a sheet for use with an optical memory element is affixed.

Fig. 3 illustrates a conventional example, and shows a cross-sectional view of essential parts of an optical memory element.

## DETAILED DESCRIPTION OF THE EMBODIMENTS

A first embodiment of the present invention will be discussed hereinbelow with reference to Fig. 1.

An optical memory element 1 in accordance with the present invention comprises:
a transparent substrate 2 made of plastic such as polycarbonate, acrylic, epoxy, amorphous polyolefine, etc., of glass or other material,
a magneto-optical recording layer 3 disposed on top of the transparent substrate 2, and formed of successive layers of for example A1N, DyFeCo, A1N and A1 in this order,
a protective layer 4 disposed on top of the magneto-optical recording layer 3, and made of an ultraviolet hardenable resin mainly composed of polyurethane acrylate, epoxy acrylate and other components, and
a polyester sheet 5 detachably disposed on top of the protective layer 4 and whose thickness is approximately equal to 50 to 300μm.

The adhesive adopted for binding the polyester sheet 5 and the protective layer 4 together should preferably have a relatively strong adhesive property with respect to the polyester sheet 5 and a relatively weak adhesive property with respect to the protective layer 4. The adhesive does not need to be applied on the entire surface of the polyester sheet 5, as long as provision is made such that the polyester sheet 5 does not unnecessarily peel off. It may be applied only on a part corresponding to the outer circumferential section of the optical memory element 1, or, if the optical memory element 1 is formed in the shape of a perforated disk, only on the outer circumferential section and the inner circumferential section.

Instead of employing a resin sheet such as the polyester sheet 5, a paper sheet, or a laminated sheet composed of a resin sheet and a paper sheet, may also be implemented.

With the above arrangement, protection from physical forces can be achieved to a certain degree, such as for example when a hard object hits the magneto-optical memory 1 and damages the recording layer 3 thereof, etc. In addition, it is the polyester sheet 5 that is hit and damaged by the hard object, and the protective layer 4 remains intact. When scratches on the polyester sheet 5 spoil the appearance of the optical memory element 1, the polyester sheet 5 should simply be replaced by a new one.

When the transparent substrate 2 is constituted by a glass substrate, the characteristics of such a glass substrate are supposed to improve the reliability of the optical memory element 1 as well as to prolong its life span by providing an improved prevention from scratches. However, when, like in the conventional art, a protective layer is bare, the protective layer might get damaged, or a recording layer might get damaged through the protective layer, thereby impeding the achievement of a long life span. However, with the present invention, the polyester sheet 5 prevents the protective layer 4 from being damaged, or the recording layer 3 from being damaged through the protective layer 4. As a result, the advantages offered by a substrate made of glass whereby a long life span may be anticipated.

A second embodiment of the present invention will be discussed hereinbelow with reference to Fig. 2.

An optical memory element 8 in accordance with the present invention comprises a sheet 6 (sheet for use with an optical memory element) provided with a labelling section 9 whereon it is possible to write with a writing utensil. The sheet 6 is detachably affixed on a protective layer 7. The user can write in the labelling section 9 by means of a pencil, a ball pen or other writing utensil.

The above arrangement presents another advantage in addition to the function of protecting the recording layer and preventing the protective layer 7 from being damaged, that applies especially to optical memory element 8 whereon information can be recorded. Namely, when the user records new information, the old sheet 6 can be removed and replaced by a new sheet 6. The contents of the newly recorded information can be inscribed in the labelling section 9 of the new sheet 6, thereby permitting the contents inscribed in the labelling section 9 to always correspond to the recorded contents. The user can thus grasp the contents of the recorded information through a simple glance at the optical memory element 8.

In addition, the contents of the recorded information are inscribed on the optical memory element 8 itself. Therefore, problems that are likely to happen when the recorded contents are labelled on a case housing the optical memory element 8, such as for example that the recorded contents of the optical memory element 8 contained in the case does not correspond to the labelled contents, do not arise.

It goes without saying that the present invention is ideal for Re-writable type optical memory elements 8, as already stated. In addition, the present invention can be adopted for Write-Once type optical memory elements, or Read-Only type optical memory elements where a recording layer is formed by writing signals by means of pits on a transparent substrate and that are accommodated with a reflecting film, as well as for other optical memory elements.

The sheet 6 mentioned earlier, comprises the labelling section 9 on its external face, whereon inscriptions can be made with a writing utensil. On its reverse face, the sheet 6 is provided with an adhesive section 6a that adheres on and can be easily detached from the protective layer 7 of the optical memory element 8. The sheet 6 has a round shape when it is to be used with disk type optical memory elements, and a rectangular shape when it is to be used with card type optical memory elements. Provision is made such that the sheet 6 covers the entire surface of the protective layer 7 of the optical memory element 8. The sheet 6 may be a resin sheet such as a polyester sheet provided with an adhesive section, or may be a paper sheet provided with an adhesive section. The sheet 6 may also be a laminated sheet composed of a paper sheet and a resin sheet. The labelling section 9 was assigned to a specific area of the sheet 6, but may as well cover the entire surface of the sheet 6. In addition, necessary items may be preliminary printed on the labelling section 9.

The suitability of the labelling section 9 for writing with a writing utensil depends on the quality of the sheet 6. Here, a prescribed process should preferably be performed at least on the labelling section 9 of the sheet 6 for improving the suitability of the labelling section 9 for writing with a writing utensil. For example, when the sheet 6 is constituted by a polyester sheet, a $SiO_2$ and polyurethane-epoxy series resin may be coated on its surface, the surface processed into a frosted glass like surface, and the sheet 6 made into a chemical matted film. Such a process not only permits to use a pencil for inscribing the recorded contents of the optical memory element 8 and to erase them with an eraser, but also allows the use of various writing utensils such as ball pens, felt-pens etc.

With a sheet 6 such that inscriptions on the labelling section 9 can be changed as described above, the contents labelled on the optical memory element 8 can be changed to match the recorded contents. Therefore, the sheet 6 does not need to be replaced each time new information is recorded. In this case, the sheet 6 only needs to be replaced when scratches spoiled its appearance, or when stains appeared thereon after the labelled contents were repeatedly erased.

As described above, an optical memory element in accordance with the present invention is designed such that a recording layer where information is recorded, a protective layer serving as protection for the recording layer and a detachable sheet are laminated in the order listed on a transparent substrate.

With the above arrangement, the recording layer can be protected to a certain extent, and the appearance of the optical memory element can be kept unspoiled by replacing the sheet.

A sheet for use with an optical memory element in accordance with the present invention comprises a labelling section that is accommodated on an external face of the sheet and whereon inscriptions can be made with a writing utensil, and an adhesive section that is accommodated on a reverse face and that can be affixed on and removed from a protective layer.

Accordingly, in addition to the above-mentioned effect, the above arrangement presents an effect that especially applies to optical memory elements whereon information can be recorded. Namely, the contents inscribed on an external face of the optical memory element always correspond to the recorded contents.

The invention being thus described, it will be obvious that the same may be varied in many ways. Such variations are not to be regarded as a departure from the scope of the invention.

There are described above novel features which the skilled man will appreciate give rise to advantages. These are each independent aspects of the invention to be covered by the present application, irrespective of whether or not they are included within the scope of the following claims.

## Claims

1. An optical memory element such that a recording layer where information is recorded, a protective layer serving as protection for said recording layer, and a detachable sheet, are laminated in the order listed upon a transparent substrate.

2. An optical memory element as defined in claim 1 wherein said sheet is made of paper.

3. An optical memory element as defined in claim 1 wherein said sheet is made of resin, or is made of a laminated body composed of paper and resin.

4. An optical memory element as defined in claim 2 or claim 3, wherein said sheet comprises a labelling section designed for writing thereon with writing utensils.

5. A sheet for use with an optical memory element comprising a recording layer where information is recorded and a protective layer serving as protection for said recording layer, characterized in comprising:

a labelling section accommodated on an external face of said sheet, and designed for writing thereon with writing utensils, and

an adhesive section accommodated on a reverse face of said sheet, that adheres to said protective layer and is detachable with respect to said protective layer.

6. A sheet for use with an optical memory element as defined in claim 5, wherein said sheet for use with an optical memory element is made of paper.

7. A sheet for use with an optical memory element as defined in claim 5, wherein said sheet for use with an optical memory element is made of resin, or is made of a laminated body composed of paper and resin.

8. A sheet for use with an optical memory element as defined in claim 5, wherein said sheet for use with an optical memory element is a polyester sheet such that a $SiO_2$ and polyurethane-epoxy series resin are coated on an external face of said sheet, and said external face is processed into a frosted glass like surface.

9. An optical memory device comprising a flat laminated element (2,3,4) including a recording layer (3), and a flexible sheet (5) detachably adhered to one side of said element and overlying said recording layer.

# FIG.1

# FIG.2

# FIG.3